## Europäisches Patentamt

## European Patent Office

## Office européen des brevets

(19)

(11) Veröffentlichungsnummer : **0 421 991 B1**

(12)

# EUROPÄISCHE PATENTSCHRIFT

(45) Veröffentlichungstag der Patentschrift :
30.12.92 Patentblatt 92/53

(51) Int. Cl.⁵ : **A22C 9/00**

(21) Anmeldenummer : **88907191.6**

(22) Anmeldetag : **28.07.88**

(86) Internationale Anmeldenummer :
**PCT/AT88/00057**

(87) Internationale Veröffentlichungsnummer :
**WO 90/00011 11.01.90 Gazette 90/02**

(54) **VORRICHTUNG ZUR BEHANDLUNG VON FLEISCH.**

(30) Priorität : **28.06.88 AT 1674/88**

(43) Veröffentlichungstag der Anmeldung :
**17.04.91 Patentblatt 91/16**

(45) Bekanntmachung des Hinweises auf die
Patenterteilung :
**30.12.92 Patentblatt 92/53**

(84) Benannte Vertragsstaaten :
**AT BE CH DE FR GB IT LI NL SE**

(56) Entgegenhaltungen :
**EP-A- 0 166 081**
**WO-A-86/07240**
**CH-A- 193 606**
**DE-C- 919 087**
**FR-A- 1 103 164**
**FR-A- 2 491 297**
**FR-A- 2 556 180**
**US-A- 2 013 504**

(56) Entgegenhaltungen :
**US-A- 2 243 492**
**US-A- 2 420 549**
**US-A- 2 537 946**
**US-A- 2 607 952**
**US-A- 4 270 244**
**US-A- 4 343 067**
**US-A- 4 360 952**

(73) Patentinhaber : **Inject Star Pökelmaschinen**
**Gesellschaft m.b.H.**
**Innstrasse 23-25**
**A-1201 Wien (AT)**

(72) Erfinder : **PROSENBAUER, Otto**
**Innstrasse 23**
**A-1201 Wien (AT)**

(74) Vertreter : **Wildhack, Helmut, Dr. Dipl.-Ing. et al**
**Patentanwälte Dipl.-Ing. Leo Brauneiss**
**Dipl.-Ing. Dr. Helmut Wildhack Landstrasser**
**Hauptstrasse 50 Postfach 281**
**A-1031 Wien (AT)**

EP 0 421 991 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Vorrichtung zur Behandlung von, Fleisch durch Ausübung von Druck auf das Fleisch mittels zumindest zweier Paare voneinander in Abstand angeordneter, zur Drehbewegung angetriebener Walzen, die an ihrer Mantelfläche mit Vorsprüngen versehen sind, die in das an den Walzen vorübergeführte Fleisch eindrücken, wobei die beiden Walzen jedes Paares in entgegengesetzter Drehrichtung angetrieben sind und das Fleisch im Spalt zwischen diesen beiden Walzen von oben nach unten transportieren und die Drehrichtung der beiden Walzen jedes Paares in Transportrichtung des Fleisches ist, und wobei die Walzen zumindest eines Walzenpaares mit unterschiedlicher Umfangsgeschwindigkeit angetrieben sind und die Breite des Spaltes zwischen den Walzen der Walzenpaare einstellbar ist.

Vorrichtungen zur Behandlung des Fleisches durch Ausübung von Druck sind in zahlreichen Konstruktionen bekannt geworden. Beispielsweise ist es aus der US-A 4 348 787 bekannt, das auf einem Förderband aufliegende Fleisch unter zwei nebeneinander im Abstand angeordneten und in gleicher Richtung zur Umlaufbewegung angetriebenen Walzen hindurchzutransportieren, welche Walzen mit pyramidenstumpfartigen Vorsprüngen versehen sind. Im Bereich dieser Walzen wird das das Fleisch tragende Förderband von unten durch federnde Platten abgestützt. Eine solche Vorrichtung hat den Nachteil einer hohen Abnützung des Förderbandes, da der Preßdruck der Walzen fast zur Gänze auf das Förderband bzw. auf seine federnde Abstützung übertragen wird. Außerdem ist ein hoher Aufwand für den Antrieb nötig, da nicht nur die Walzen selbst, sondern auch das Förderband angetrieben werden müssen

Eine Vorrichtung der eingangs geschilderten Art ist aus der DE-A 3 344 284 bekannt. Dabei erfolgt die Einstellung des Spaltes zwischen den Walzen dadurch, daß die eine Walze an einem Schwenkarm gelagert ist, der mittels eines Pneumatikzylinders auf die andere, ortsfest gelagerte Walze zu oder von ihr wegbeweglich ist. Dies macht Schwierigkeiten bei der Reinigung der Walzen und bei Verwendung mehr als eines Walzenpaares ist die Änderung des Walzenspaltes nicht hinreichend vielseitig möglich.

Die Erfindung setzt sich zur Aufgabe, eine Vorrichtung der zuletzt genannten Art so zu verbessern, daß eine vielseitige Anpassung des Walzenspaltes an verschiedene Fleischqualitäten bzw. Fleischdicken möglich ist, ohne die Reinigung der Walzen zu erschweren. Die Erfindung löst diese Aufgabe dadurch, daß die jeweils eine Walze jedes Walzenpaares in einem Kasten gelagert ist, der relativ zu einem weiteren Kasten parallel verschiebbar ist, in welchem die jeweils andere Walze jedes Walzenpaares gelagert ist, wobei jeder Kasten einen eigenen Motor für den Antrieb seiner Walzen aufweist, und daß die beiden Kästen zusätzlich relativ zueinander schwenkbar sind. Dadurch wird es möglich, den durch die Walzen auf das Fleisch ausgeübten Druck und die durch die Vorsprünge der Walzen im Zusammenhang mit der unterschiedlichen Umfangsgeschwindigkeit der beiden Walzen zumindest eines Walzenpaares ausgeübten Zerr- bzw. Dehneffekt auf die Fleischstücke an verschiedene Fleischqualitäten bzw. Fleischdicken anzupassen. Die relative Schwenkmöglichkeit des einen Kastens in Bezug auf den anderen Kasten macht die Walzen für Reinigungs- und Austauschzwecke leicht zugänglich und kann - falls gewünscht - auch zur Einstellung der Spaltform dienen. Die Anordnung eines eigenen Motors für die Walzen jedes Kastens erspart die Änderung des Antriebes der jedem Kasten zugeordneten Walzen, wenn die beiden Kästen relativ zueinander zwecks Veränderung der Größe des Walzenspaltes verschoben werden.

Aus der US-A 2 243 492 ist es zwar bekannt, bei einer Vorrichtung mit zwei übereinander angeordneten Walzenpaaren die beiden Walzen jedes Paares in einem eigenen Kasten zu lagern, wobei der eine Kasten zwecks Erleichterung der Walzenreinigung vom anderen Kasten wegschwenkbar ist. Eine Änderung der Spaltbreite zwischen den beiden Walzen jedes Paares ist jedoch nicht möglich, da die beiden Walzen jedes Paares zwecks Einleitung der Drehbewegung von einem gemeinsamen Antrieb mittels Zahnrädern gekuppelt sind, welche Zahnradkupplung bei der Verschwenkung des einen Kastens gelöst wird.

Im Rahmen der Erfindung können auch mehr als zwei Walzenpaare vorhanden sein. Auch bei Anordnung mehrerer Walzenpaare entstehen keine nennenswerten Reibungsverluste, wogegen bei einer Vorrichtung nach der US-A 4 348 787 die Reibungsverluste mit jeder zusätzlichen Walze steigen.

Bei der erfindungsgemäßen Vorrichtung können die Walzenpaare auch untereinander unterschiedliche Umfangsgeschwindigkeiten haben, insbesondere die beiden Walzen eines unteren Walzenpaares eine höhere Umfangsgeschwindigkeit als die beiden Walzen eines oberen Walzenpaares, wodurch sich ebenfalls eine Zerrung bzw. Dehnung des Fleisches beim Hindurchlaufen durch den Durchlaufspalt zwischen den Walzen ergibt. Auch dieser Effekt läßt sich durch Veränderung der Spaltbreite zwischen den Walzen der Walzenpaare variieren.

Gemäß einer bevorzugten Ausführungsform der Erfindung sind die beiden Kästen aneinander durch seitliche Bolzen des einen Kastens geführt, welche in Schlitzen des anderen Kastens gleiten, wobei die beiden Kästen relativ zueinander um die gemeinsame Achse dieser Bolzen schwenkbar sind. Dies ergibt eine besonders einfache Lösung, die beiden Kästen sowohl parallel zueinander verschieben als auch relativ zueinander schwenken zu können.

Gemäß einer Weiterbildung der Erfindung sind die beiden Kästen von einem Steher eines Gestelles getragen, der an jener Seite des einen Kastens befestigt ist, welche dem anderen Kasten abgewendet ist, wobei unterhalb der Walzenpaare im Gestell ein freier Raum zur Unterbringung eines Behälters zur Auffangung des behandelten Fleisches vorgesehen ist. Dieser freie Raum bildet nach Entfernung des Behälters zugleich einen Raum, in welchem bei der Reinigung der Walzen bzw. bei einem Walzenaustausch der eine Kasten abgeschwenkt werden kann. Eine besonders günstige Bauweise ergibt sich im Rahmen der Erfindung dann, wenn der Steher auf einem, vorzugsweise verfahrbaren, Sockel befestigt ist, der in Draufsicht U-förmig ist, so daß in den Raum zwischen den Schenkeln des U ein den Behälter für das behandelte Fleisch tragender Wagen einschiebbar ist. Dies ermöglicht die Verwendung eines großräumigen Behälters, der im gefüllten Zustand nicht mehr von Hand zu tragen ist, sondern den erwähnten Wagen bildet.

Wie bereits erwähnt, ermöglicht die Schwenkbarkeit des Kastens auch eine leichte Austauschbarkeit der Walzen, wobei vorzugsweise mehrere Walzensätze mit unterschiedlichen Vorsprüngen vorgesehen sind, z.B. in Form sägezahnartiger Messer, Pyramidenstümpfe oder Längsrippen mit Zannprofil. Dadurch läßt sich die Bearbeitung variieren und an den jeweils gewünschten Effekt anpassen. Mit Messern läßt sich beispielsweise eine Perforation des Fleisches derart erreichen, daß die Fleischoberfläche in der Art eines Steakers geöffnet wird, wobei Bindehäute und Fleischfasern durchschnitten werden, so daß eine gute Mürbung des Fleisches erzielt wird (sogenannter "Steakereffekt"). Mit Walzen, die stumpfe Vorsprünge, etwa in der Form von Pyramidenstümpfen, tragen, läßt sich, wie bereits erwähnt, eine Quetschung der Oberfläche des Fleisches in günstiger Weise erzielen, wodurch die Eiweißaktivierung optimiert wird. Längsrippen an den Walzen eignen sich besonders dann, wenn das Fleisch gezerrt bzw. gedehnt werden soll, insbesondere unter Zuhilfenahme einer Differenz in der Umfangsgeschwindigkeit der einzelnen Walzen. Durch die leichte Austauschbarkeit der Walzen ist ein problemloser Übergang von einer bestimmten Bearbeitungsart auf eine andere bestimmte Bearbeitungsart ebenso,rasch und leicht möglich, wie der kombinierte Einsatz unterschiedlicher Bearbeitungswerkzeuge, z.B. Steakermesser und bzw. oder Dehnrippen und bzw. oder pressende Vorsprünge. Auch der Einsatz artgleicher, jedoch unterschiedlicher Vorsprünge ist denkbar, z.B. zwei Walzenpaare mit jeweils unterschiedlichen Steakermessern.

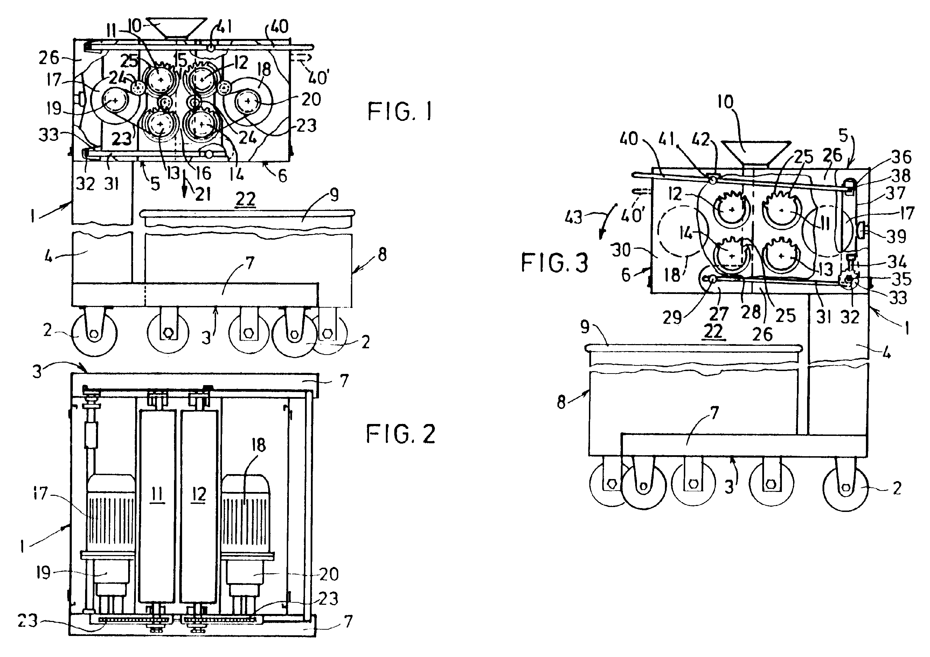

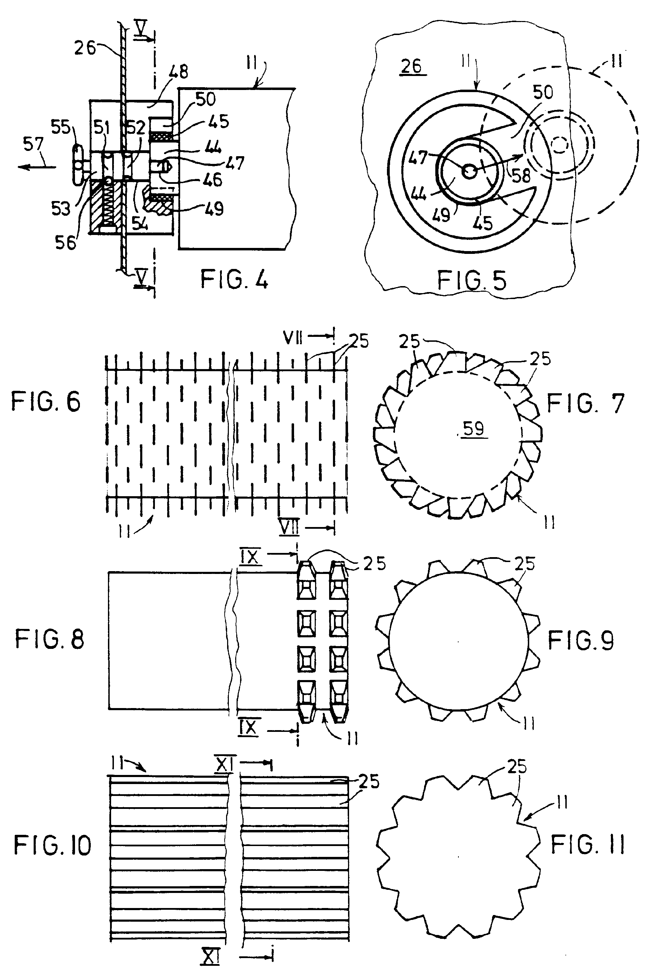

In der Zeichnung ist der Erfindungsgegenstand an Hand von Ausführungsbeispielen schematisch dargestellt. Fig.1 zeigt die Vorrichtung in Achsrichtung der Walzen gesehen von der einen Seite, wobei einzelne Teile weggebrochen sind. Fig.2 ist eine Draufsicht zu Fig.1. Fig.3 zeigt eine Seitenansicht der Vorrichtung von der anderen Seite. Fig.4 zeigt die Walzenlagerung im Axialschnitt durch die Walze. Fig.5 ist ein Schnitt nach der Linie V-V der Fig.4. Die Fig.6 bis 11 zeigen drei Ausführungsformen von an den Walzen angeordneten Vorsprüngen in Seitenansicht bzw. im Schnitt, wobei die Fig.7,9 und 11 Schnitte nach den Linien VII-VII der Fig.6 bzw. IX-IX der Fig.8 bzw. XI-XI der Fig.10 sind.

Die Vorrichtung nach den Fig.1 bis 3 hat ein Gestell 1, das mittels Rädern 2 verfahrbar ist. Die Räder 2 sind an einem Sockel 3 gelagert, an dessen Rand ein Steher 4 des Gestelles 1 befestigt ist, der zwei Kästen 5,6 des Gestelles konsolenartig trägt. Der Sockel 3 ist, in Draufsicht gesehen, U-förmig und daher an einem Stirnende offen, so daß zwischen die beiden Schenkel 7 des Sockels 3 ein Wagen 8 einschiebbar ist, der einen Behälter 9 für das behandelte Fleisch bildet. Das zu behandelnde Fleisch wird der Vorrichtung durch einen Trichter 10 zugeführt und fällt durch sein Eigengewicht nach unten in den Spalt zwischen mehreren Walzen 11 bis 14,die in Form zweier Walzenpaare in den Kästen 5 bzw.6 drehbar gelagert sind, was später noch näher beschrieben wird. Die Walzen 11,12 bzw. 13,14 jedes Paares haben horizontale Achsen und sind voneinander in Abstand angeordnet, welcher Abstand einstellbar ist, was später noch näher beschrieben wird, so daß der Spalt 15 bzw.16 zwischen den Walzen jedes Walzenpaares vergrößert oder verkleinert werden kann. Die jeweils in Bezug auf Fig.1 links liegenden Walzen 11,13 jedes Walzenpaares sind hiebei im Kasten 5 gelagert, die jeweils anderen Walzen 12,14 jedes Walzenpaares im rechten Kasten 6. Jeder Kasten 5,6 hat für den Antrieb seiner Walzen einen eigenen Elektromotor 17 bzw.18. Durch unterschiedliche Drehzahlen der Motoren 17,18 bzw. von ihnen angetriebener Getriebe 19,20 läßt sich erreichen, daß die Walzen jedes Walzenpaares mit unterschiedlicher Geschwindigkeit umlaufer, um das durch den Walzenspalt 15 bzw.16 hindurchtransportierte Fleisch zu bearbeiten, z.B. zu quetschen und/oder zu dehnen. Das Fleisch, welches über den Trichter 10 zugeführt wurde, wird hiebei von den obersten Walzen 11,12 erfaßt, in den Spalt 15 hineingezogen, dem Spalt 16 zwischen den Walzen 13,14 des unteren Walzenpaares zugeführt und nach Passieren dieses Spaltes 16 nach unten in Richtung des Pfeiles 21 (Fig.1) in den Behälter 9 des Wagens 8 ausgeworfen. Zur Aufnahme dieses Behälters 9 des Wagens 8 befindet sich unterhalb des Walzenspaltes 16 genügend freier Raum 22 zur Unterbringung des Wagens 8. Anstelle des Wagens 8 kann selbstverständlich auch ein anderes Transportmittel für das behandelte Fleisch treten, z.B. ein Förderband od.dgl.

Die Walzen 11 bis 14 werden von den Getrieben 19,20 über zwei voneinander getrennte Kettentriebe 23 angetrieben. Spannrollen 24 dienen in bekannter Weise zur Spannung der Kettentriebe und zur Erzielung eines großen Umschlingungswinkels.

Zur Erzielung eines guten Einzuges des zu bearbeitenden Fleisches, aber auch zur Erzielung des gewünschten Bearbeitungseffektes auf das Fleisch, sind die Walzen 11 bis 14 mit Vorsprüngen 25 (Fig.6 bis 11) versehen, welche an den einzelnen Walzen gleich oder verschieden ausgebildet sein können.

Zur Verstellung der Größe des Spaltes 15 bzw.16 zwischen den Walzen 11,12 bzw.13,14 sind die beiden Kästen 5,6, in welchen die Walzen gelagert sind, relativ zueinander verschieblich. Hiezu ist der in Fig.1 links dargestellte Kasten 5 mit dem Steher 4 fest verbunden, wogegen der in Fig.1 rechts liegende Kasten 6 mit dem Kasten 5 über eine Gleitführung verbunden ist. Zu diesem Zweck trägt der stationäre Kasten 5 an seinen beiden seitlichen Wangen 26 (Fig.1,3) unten zungenartige Verlängerungen 27, die mit horizontalen Schlitzen 28 versehen sind. In diesen Schlitzen 28 gleiten Lagerbolzen 29 (Fig.3), welche an den seitlichen Wangen 30 des vom Steher 4 weiter entfernten Kasten 6 befestigt sind, wobei die Wangen 30 von den Verlängerungen 27 der Wangen 26 umgriffen werden. Die Lagerbolzen 29 sind an ihren äußeren Enden mit Klemmschrauben versehen, um die eingestellte Lage der Lagerbolzen 29 in den Schlitzen 28 sichern zu können. Die Lagerbolzen 29 sind an den einen Enden von Stangen 31 gelagert, deren andere Enden am Exzenterbolzen 32 gelagert sind, die an Exzenterscheiben 33 befestigt sind. Die eine Exzenterscheibe 33 (Fig.3) ist als Rastscheibe mit einer Vielzahl von an ihrem Umfang versehenen Rasten ausgebildet, in die ein federbelasteter Rastbolzen 34 einrastet und somit die Drehlage der Exzenterscheibe 33 sichert. Nach Anheben des Rastbolzens 34 kann die Exzenterscheibe 33 mittels eines der Vorrichtung beigegebenen Schlüssels, welcher auf einen Sechskant 35 der Exzenterscheibe 33 aufgesetzt wird, verdreht werden, wodurch die Lagerbolzen 29 in den Schlitzen 28 verschoben werden, so daß die beiden Kästen 5,6 einander genähert oder voneinander entfernt werden, wodurch die Breite der zwischen den Walzen befindlichen Spalte 15,16 entsprechend verändert wird. Um die beiden Kästen 5,6 hiebei parallel zu führen, sind an den beiden seitlichen Wangen 26 des am Steher 4 befestigten Kastens 5 weitere Exzenterscheiben 36 drehbar gelagert, welche mit den Exzenterscheiben 33 mittels Kettentrieben 37 gekuppelt sind, so daß sich an den Exzenterscheiben 36 befestigte Exzenterbolzen 38 synchron mit den Exzenterbolzen 32 drehen. Ein Kettenspanner 39 hält die Kettentriebe 37 stets gespannt, so daß ein Schlupf vermieden wird. An den Exzenterbolzen 38 sind Stangen 40 angelenkt, an denen Rastbolzen 41 befestigt sind, die in Rasten 42 der Wangen 30 des Kastens 6 eintreten und ein Abkippen des Kastens 6 verhindern. Die beiden Stangenpaare 31,40 bilden somit eine Parallelführung für den Kasten 6, wenn die Exzenterscheibe 33 mittels des Schlüssels nach Anheben des Rastbolzens 34 gedreht wird.

Zur Reinigung und für eine Auswechslung der Walzen 11 bis 14 kann der Kasten 6 nach unten um die Achse der Lagerbolzen 29 weggeschwenkt werden. Um dies zu ermöglichen, müssen lediglich die freien Enden der Stangen 40 nach unten gedrückt werden, so daß sie in die mit strichlierten Linien in Fig.3 dargestellte Lage 40' gelangen und die Rastbolzen 41 aus den Rasten 42 ausgerückt werden. Der Kasten 6 läßt sich dann in Richtung des Pfeiles 43 (Fig.3) um die Achse der Lagerbolzen 29 abschwenken, so daß die Walzen zugänglich sind.

Um die Walzen 11 bis 14 leicht auswechseln zu können, ist die Lagerung der Walzen zumindest einseitig so ausgebildet, wie dies in den Fig.4 und 5 für die Walze 11 dargestellt ist. Die Walze 11 hat hiebei einen stirnseitigen Ansatz 44, der von einem Gleitring 45 aus Kunststoff umgeben ist und an seinem stirnseitigen Ende eine in der Achse der Walze 11 liegende Bohrung 46 aufweist, in welche ein Zapfen 47 zur Zentrierung und Fixierung der Walze 11 in einem an der Wange 26 befestigten Gleitlager 48 eingesetzt werden kann. Der Körper des Gleitlagers 48 hat eine den Ansatz 44 mit dem Gleitring 45 aufnehmende Öffnung 49, von der ein radialer Schlitz 50 bis zum äußeren Umfang des Gleitlagers 48 führt. Durch diesen Schlitz 50 kann der Ansatz 44 samt dem Gleitring 45 in das Gleitlager 48 eingeführt bzw. wieder ausgebaut werden, wenn der Zapfen 47 entsprechend weit zurückgezogen ist. Hiezu ist der Zapfen 47 an einem mit zwei Rasten 51,52 versehenen Bolzen 53 befestigt, der in einer Bohrung 54 des Gleitlagers 48 in Achsrichtung der Walze 11 verschiebbar ist und außen mit einem Handgriff 55 versehen ist. Mit den Rasten 51,52 wirkt eine federbelastete Kugelsicherung 56 zusammen, deren Kugel in eine der beiden Rasten 51,52 einrastet und dadurch den Bolzen 53 in einer von zwei definierten Lagen sichert. In der in Fig.4 dargestellten Lage, welcher der Betriebsstellung entspricht, ist die Walze 11 gegen Herausnehmen aus dem Lager 48 gesichert. Wird jedoch der Bolzen 53 in Richtung des Pfeiles 57 gezogen, so wird die Kugelsicherung 56 aus der Rast 51 herausgedrückt und es kann der Bolzen 53 so weit herausgezogen werden, daß die Kugelsicherung 56 in die Rast 52 einschnappt. In dieser Stellung gibt der Zapfen 47 die Bohrung 46 frei und es kann die Walze 11 in Richtung des Pfeiles 58 (Fig.5) durch den Schlitz 50 aus dem Lager 48 ausgebaut werden.

Die andere Stirnseite der Walze 11 kann in gleicher Weise gelagert sein, jedoch auch mit einem üblichen Stecklager, in welches der Ansatz 44 der Walze eingesteckt wird.

Auf diese Weise können die Walzen nicht nur zwecks Reinigung leicht ausgebaut werden, sondern es besteht auch die Möglichkeit eines einfachen Austausches jeder bisher verwendeten Walze gegen eine andersgeartete Walze. Beispiele für unterschiedlich ausgebildete Walzen sind in den Fig.6 bis 11 dargestellt, jeweils an Hand der Walze 11, jedoch können selbstverständlich alle Walzen in der im folgenden beschriebenen Weise ausgebildet werden.

Bei der Ausführungsform nach den Fig.6 und 7 sind die Vorsprünge 25 der Walze 11 als sägezahnartige Messer ausgebildet, welche in Reihen, die in Achsrichtung der Walze 11 voneinander in Abstand liegen, an der Oberfläche der Walze 11 angeordnet. In benachbarten Reihen sind diese Messer gegeneinander um den halben Abstand zweier benachbarter Messer einer Reihe versetzt. Die Messer können an Messerscheiben 59 (Fig.7) sitzen, etwa mit einer Dicke von 0,8 mm, die mittels Distanzstücken voneinander in Abstand gehalten sind, so daß also die gesamte Walze 11 aus einer Vielzahl von Messerscheiben 11, die mit Distanzscheiben abwechseln, aufgebaut ist. Durch die Messer wird das durch die Vorrichtung durchlaufende Fleisch an der Oberfläche aufgeschnitten, in der Art von Steakermessern. Solche Bearbeitungswerkzeuge werden vorzugsweise als obere Walzen 11,12 (Fig.1) eingesetzt.

Die Walze 11 nach den Fig.8 und 9 ist mit pyramidenstumpfförmig ausgebildeten Vorsprüngen 25 an ihrer Mantelfläche versehen. Durch solche Vorsprünge 25 wird das Fleisch an seiner Oberfläche gequetscht und gedrückt bzw. eingerissen. Diese Vorsprünge 25 sind in Fig.8 der Einfachheit halber lediglich in zwei Reihen an der Walze 11 dargestellt, es versteht sich jedoch, daß die gesamte Walzenoberfläche mit solchen Vorsprüngen 25 versehen sein kann.

Bei der Walze 11 nach den Fig.10 und 11 sind die Vorsprünge 25 als in Längsrichtung der Walze 11 verlaufende Längsrippen mit Zahnprofil ausgebildet. Dadurch wird das Fleisch gequetscht.

Es sind auch andere Formen der Vorsprünge 25 denkbar, z.B. spitze Pyramiden oder kegelförmige Vorsprünge.

Alle diese Vorsprünge 25 mit Ausnahme der Messer (Fig.6,7) können auch aus Kunststoffmaterial bestehen, z.B. in Form eines entsprechend ausgebildeten Belages auf der Walze.

Die beschriebene Behandlung des Fleisches eignet sich auch für solche Fleischsorten, welche vor oder nach der Behandlung in der beschriebenen Vorrichtung einer gesonderten Lakebehandlung unterworfen werden, z.B. durch Einspritzen der Lake, da die beschriebene Oberflächenbehandlung des Fleisches eine bessere Verteilung der Lake im Fleisch und damit eine homogene Fleischqualität erzielt.

Walzen (11 bis 14), die an ihrer Mantelfläche mit Vorsprüngen (25) versehen sind, die in das an den Walzen vorübergeführte Fleisch eindrücken, wobei die beiden Walzen (11,12 bzw. 13,14) jedes Paares in entgegengesetzter Drehrichtung angetrieben sind und das Fleisch im Spalt (15,16) zwischen diesen beiden Walzen von oben nach unten transportieren und die Drehrichtung der beiden Walzen (11,12 bzw. 13,14) jedes Paares in Transportrichtung des Fleisches ist, und wobei die Walzen (11 bis 14) zumindest eines Walzenpaares mit unterschiedlicher Umfangsgeschwindigkeit angetrieben sind und die Breite des Spaltes (15,16) zwischen den Walzen (11 bis 14) der Walzenpaare einstellbar ist, dadurch gekennzeichnet, daß die jeweils eine Walze (z.B. 11) jedes Walzenpaares in einem Kasten (5) gelagert ist, der relativ zu einem weiteren Kasten (6) parallel verschiebbar ist, in welchem die jeweils andere Walze (z.B.12) jedes Walzenpaares gelagert ist, wobei jeder Kasten (5,6) einen eigenen Motor (17 bzw.18) für den Antrieb seiner Walzen aufweist, und daß die beiden Kästen (5,6) zusätzlich relativ zueinander schwenkbar sind.

2. Vorrichtung nach Anspruch 1, dadurch gekennzeichnet, daß die beiden Kästen (5,6) aneinander durch seitliche Bolzen (29) des einen Kastens (5) geführt sind, die in Schlitzen (28) des anderen Kastens (6) gleiten, wobei die beiden Kästen (5,6) relativ zueinander um die gemeinsame Achse dieser Bolzen (29) schwenkbar sind (Fig.3).

3. Vorrichtung nach Anspruch 1 oder 2, dadurch gekennzeichnet, daß die beiden Kästen (5,6) von einem Steher (4) eines Gestelles (1) getragen sind, der an jener Seite des einen Kastens (5) befestigt ist, welche dem anderen Kasten (6) abgewendet ist und daß unterhalb der Walzenpaare (11 bis 14) im Gestell (1) ein freier Raum (22) zur Unterbringung eines Behälters (9) zur Auffangung des behandelten Fleisches vorgesehen ist.

4. Vorrichtung nach Anspruch 3, dadurch gekennzeichnet, daß der Steher (4) auf einem, vorzugsweise verfahrbaren, Sockel (3) befestigt ist, der in Draufsicht U-förmig ist, so daß in den Raum zwischen den Schenkeln (7) des "U" ein den Behälter (9) für das behandelte Fleisch tragender Wagen (8) einschiebbar ist.

**Patentansprüche**

1. Vorrichtung zur Behandlung von Fleisch durch Ausübung von Druck auf das Fleisch mittels zumindest zweier Paare voneinander in Abstand angeordneter, zur Drehbewegung angetriebener

**Claims**

1. A device for treating meat by exerting pressure on the meat by means of at least two pairs of rollers (11 to 14), arranged so as to be spaced apart from one another and driven for rotational motion, and provided on their surface with projections (25) which press into the meat guided past the rollers, wherein the two rollers (11, 12 or 13, 14) of each pair are driven in the opposite rotational direction and convey the meat from the top to the bottom in the gap (15, 16) between these two rollers and the rotational direction of the two rollers (11, 12 or 13, 14) of each pair is in the conveying direction of the meat, and wherein the rollers (11 to 14) of at least one roller pair are driven at different peripheral speeds and the width of the gap (15, 16) between the rollers (11 to 14) of the roller pairs is adjustable, characterised in that one roller respectively (e.g. 11) of each roller pair is mounted in a cabinet (5) which is displaceable parallel relative to a further cabinet (6) in which the other roller respectively (e.g. 12) of each roller pair is mounted, each cabinet (5, 6) having a separate motor (17 or 18) to drive its rollers, and in that the two cabinets (5, 6) are also capable of swivelling relative to one another.

2. A device according to claim 1, characterised in that the two cabinets (5, 6) are guided against one another by means of lateral bolts (29) of one cabinet (5) which slide in slots (28) of the other cabinet (6), the two cabinets (5, 6) being capable of swivelling relative to one another about the common axis of these bolts (29) (Fig. 3).

3. A device according to claim 1 or 2, characterised in that the two cabinets (5, 6) are carried by an upright (4) of a frame (1) which is secured to the side of one cabinet (5) which is turned away from the other cabinet (6), and in that beneath the roller pairs (11 to 14) a free space (22) is provided in the frame (1) to accommodate a container (9) for collecting the treated meat.

4. A device according to claim 3, characterised in that the upright (4) is secured on top of a preferably mobile base (3) which in plan view is U-shaped, so that a trolley (8) carrying the container (9) for the treated meat can be pushed into the space between the arms (7) of the "U".

**Revendications**

1. Dispositif pour traiter la viande par application de pression à la viande au moyen d'au moins deux paires de cylindres (11 à 14) disposés à distance l'un de l'autre et entraînés en rotation, dont la surface latérale est pourvue de saillies (25) s'enfonçant dans la viande amenée à passer devant les cylindres, dans lequel les deux cylindres (11, 12 ou 13, 14) de chaque paire sont entraînés en rotation en sens contraire et transportent la viande de haut en bas dans l'intervalle (15, 16) entre ces deux cylindres, le sens de rotation des deux cylindres (11, 12 ou 13, 14) de chaque paire correspondant au sens de transport de la viande, et dans lequel les cylindres (11 à 14) d'au moins une paire de cylindres sont entraînés à des vitesses circonférentielles différentes et la largeur de l'intervalle (15, 16) entre les cylindres (11 à 14) des paires de cylindres est réglable, caractérisé en ce qu'un cylindre (par exemple 11) de chaque paire de cylindres est monté rotatif dans un carter (5) qui est déplaçable en translation, parallèlement, par rapport à un carter supplémentaire (6) dans lequel est monté rotatif l'autre cylindre (par exemple 12) de chaque paire de cylindres, chaque carter (5, 6) comportant un moteur (17 ou 18) qui lui est propre pour l'entraînement de ses cylindres, et que les deux carters (5, 6) sont en outre pivotants l'un par rapport à l'autre.

2. Dispositif selon la revendication 1, caractérisé en ce que les deux carters (5, 6) sont guidés l'un sur l'autre par des chevilles latérales (29) faisant partie d'un carter (5) et glissant dans des fentes (28) de l'autre carter (6), les deux carters (5, 6) étant pivotants l'un par rapport à l'autre autour de l'axe commun de ces chevilles (29) (Fig. 3).

3. Dispositif selon la revendication 1 ou 2, caractérisé en ce que les deux carters (5, 6) sont portés par un montant (4) d'un bâti (1), qui est relié au côté du premier carter (5) qui est éloigné de l'autre carter (6), et qu'un espace libre (22) pour la disposition d'un récipient (9) destiné à recueillir la viande traitée, est prévu dans le bâti (1) au-dessous des paires de cylindres (11 à 14).

4. Dispositif selon la revendication 3, caractérisé en ce que le montant (4) est fixé sur un socle (3), lequel est de préférence mobile, qui possède une forme en U vu en plan, de manière qu'un chariot (8) portant le récipient (9) pour la viande traitée puisse être engagé dans l'espace entre les branches (7) du "U".

FIG.3

FIG. I

FIG. 2

FIG. 4

FIG. 5

FIG. 6

FIG. 7

FIG. 8

FIG. 9

FIG. 10

FIG. 11